Europäisches Patentamt

European Patent Office

Office européen des brevets

(11) Publication number: **0 092 802**
**B1**

(12) EUROPEAN PATENT SPECIFICATION

(45) Date of publication of patent specification: **19.04.89**

(51) Int. Cl.⁴: $H\ 01\ M\ 8/04$, $H\ 01\ M\ 8/00$

(21) Application number: **83103890.6**

(22) Date of filing: **20.04.83**

(54) Liquid fuel cell.

(30) Priority: **23.04.82 JP 67416/82**

(43) Date of publication of application:
**02.11.83 Bulletin 83/44**

(45) Publication of the grant of the patent:
**19.04.89 Bulletin 89/16**

(84) Designated Contracting States:
**CH DE FR GB LI NL**

(56) References cited:
**FR-A-1 300 631**
**FR-A-1 344 791**
**GB-A-1 105 138**
**NL-A-6 402 244**
**US-A-3 382 103**
**US-A-3 440 102**
**US-A-3 475 222**
**US-A-3 607 421**
**US-A-4 155 712**

**CHEMICAL ABSTRACTS, vol. 83, no. 20, 17th
November 1975, page 165, no. 166845t,
Columbus, Ohio, US; C.H. HAMANN et al.:
"Formate-air primary battery and fuel cell" &
POWER SOURCES SYMP., PROC. 1974, 26,
175-7**

(73) Proprietor: **HITACHI, LTD.**
**6, Kanda Surugadai 4-chome Chiyoda-ku
Tokyo (JP)**

(72) Inventor: **Horiba, Tatsuo**
**3-17-2-402, Moriyama-cho
Hitachi-shi Ibaraki-ken (JP)**
Inventor: **Iwamoto, Kazuo**
**5-32-7, Kuji-cho
Hitachi-shi Ibaraki-ken (JP)**
Inventor: **Kawana, Hidejiro**
**1047-92, Moriyama-cho
Hitachi-shi Ibaraki-ken (JP)**
Inventor: **Fujita, Kazunori**
**2650-24, Muramatsu Tohkai-mura
Naka-gun Ibaraki-ken (JP)**
Inventor: **Tamura, Kohki**
**6-17-3, Kuji-cho
Hitachi-shi Ibaraki-ken (JP)**

(74) Representative: **Strehl, Peter, Dipl.-Ing. et al
Patentanwälte Strehl Schübel-Hopf Groening
Schulz Maximilianstrasse 54 Postfach 22 14 55
D-8000 München 22 (DE)**

Courier Press, Leamington Spa, England.

## Description

The present invention relates to a liquid fuel cell comprising a fuel element according to the pre-characterizing portion of claim 1.

In a conventional fuel cell using a liquid fuel such as methanol, a fuel tank is provided and the fuel is supplied from the fuel tank to the cell body by a pump or the like, as disclosed, for example, in Japanese Patent Publication No. 44777/1973. However, the pump and other auxiliary devices make it difficult to realize the fuel cell in a compact size and with low weight. That is, the conventional fuel cell is not suited for being transported. Further, a serious problem arises with regard to preventing the leakage of liquid when the fuel cell is constructed as a portable unit. In particular, a completely air-tight construction is required when a reactive reagent is to be employed such as methanol or formalin, presenting a great problem from the viewpoint of design and manufacture. Moreover, cumbersome operation is required to replenish the fuel. Therefore, such a conventional fuel cell is not suited for use as a portable power source for ordinary people.

GB—A—1,105,138 discloses fuel battery plants including at least one fuel cell, for instance a conventional bi-polar assembly having hollow electrodes, through which cell a liquid, comprising a solution of fuel and electrolyte, is fed from a supply tank to an effluent tank during a working period. To render the liquid suitable for use in a further working period an amount of liquid corresponding to the water formed in oxidizing the fuel is discarded and a charge comprising enough fuel to replace that used plus enough concentrated electrolyte to replace that discarded in the water is added to the liquid. When in this known-assembly for example hydrogen is used as the fuel, the electrolyte may be added in solid form, however when for example hydrazine is used as the fuel, the fuel and electrolyte charge would be in form of a concentrated aqueous solution, wherein a removable capsule may be provided in the fuel cell containing the charge of fuel and concentrated electrolyte.

In view of the above state of art the object underlying the invention is to provide a liquid fuel cell having small size and reduced weight and featuring the advantages of excellent portability and easy handling, which fuel cell includes a fuel element capable of detachably being attached to the cell by means of a cartridge in a simple operation and eliminates the probability of fuel leakage even during the attaching and detaching operations.

The above object is solved by a liquid fuel cell including a fuel element which is accommodated in a detachable cartridge and comprises, according to the characterizing portion of claim 1, fuel which is in non-fluid form, but is convertible into fluid form by desorption or hydrolysis on addition of water.

Preferred and advantageous embodiments of the liquid fuel cell according to the invention are set out in the subclaims.

As the liquid fuel for the fuel element according to the present invention methanol, formic acid, formalin, hydrazine and the like are used. To obtain the fuel in a non-fluid state the liquid fuel is converted into a solid or a paste-like form under ordinary conditions by either physical or chemical means but without any additional external means, wherein conventional methods can be employed as the physical or chemical means. For instance, a preferred method for preparing the fuel element in non-fluid form resides in the adsorption of one of the above liquid fuels on a suitable adsorbing agent, such as dextrin, dextran, silica gel, silica, alumina, molecular sieves, kaolin, diatomaceous earth, carbon black, activated carbon, and the like. According to another chemical method the fuel element is prepared in non-fluid form by forming solid salts or polymers of the liquid fuels. So, formic acid is converted into sodium formate or potassium formate, hydrazine is converted into hydrazinium sulfate, methanol is chemically converted into lithium methylate, sodium methylate or potassium methylate, and formaldehyde is polymerized into metaformaldehyde or paraformaldehyde.

The fuel which is in the non-fluid state can be returned back into the initial liquid state as mentioned below. When the fuel is adsorbed by dextrin, dextran, silica gel, silica, alumina, molecular sieves, kaoloin or diatomaceous earth, water should simply be added. When the fuel is adsorbed by carbon black or activated carbon, heat should be applied, or water should be added under heated condition. When the fuel is used in the form of sodium formate, potassium formate or hydrazinium sulfate, the fuel can be converted back into the liquid state by hydrolysis. When the fuel is used in the form of metaformaldehyde or a paraformaldehyde, it can be returned back to the initial fuel by adding water under heated condition.

Preferred embodiments of the invention will be described with reference to the accompanying drawings, in which

Fig. 1 is a perspective view of fuel element according to an embodiment of the present invention;

Fig. 2 is a section view illustrating construction of a fuel cell which is loaded with the fuel element;

Fig. 3 and 4 are diagrams schematically illustrating fuel cells of the laminated type according to other embodiments; and

Fig. 5 is a graph showing discharge characteristics of the liquid fuel cell according to an embodiment of the present invention.

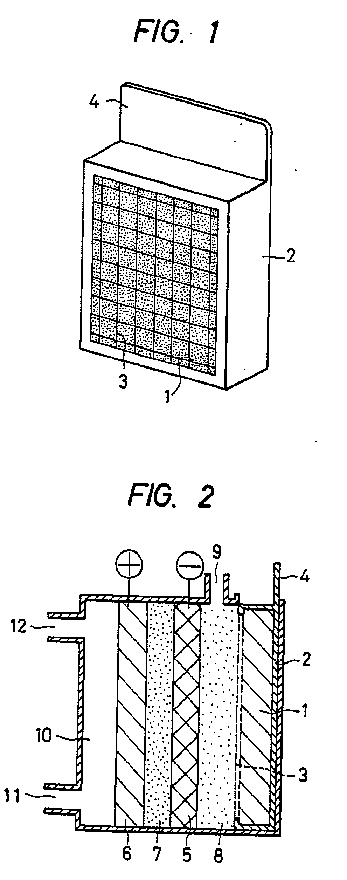

The fuel element of the present invention can be conveniently used if it is wrapped in a paper, in a net-like substrate material, or in a fibrous substrate material such as woven fabric or nonwoven fabric, or if it is contained in a case (cartridge) of which a portion is made of the

2

above-mentioned substrate material. Fig. 1 illustrates an example of the fuel element structure in which reference numeral 1 denotes the actual fuel element which is in the non-fluidized state, 2 denotes a cartridge for accommodating the fuel element, 3 denotes a net-like substrate material (net) provided in a portion of the cartridge, and 4 denotes a flange formed on the upper portion of the cartridge. The thus constructed fuel element can be fitted into the fuel cell, or be removed therefrom very easily, eliminating the probability of leakage when it is attached or detached. Accordingly, the liquid fuel cell can be handled in a remarkably simplified manner.

The fuel element 1 of Fig. 1 may be wrapped in a fibrous substrate material (not shown) before it is accommodated in the cartridge.

The fuel element constructed in the form of a cartridge shown in Fig. 1, can be very easily attached to the fuel cell or detached therefrom. Fig. 2 illustrates the case where the above-mentioned cartridge 4 is mounted on the fuel cell. Fig. 2 is a section view illustrating the construction of the fuel cell, in which reference numeral 5 denotes an anode, 6 denotes a cathode, 7 denotes an electrolyte, 8 denotes a chamber containing anolyte or fuel, 9 denotes a port for exhaust gases such as carbon dioxide gas formed by the cell reaction, 10 denotes a chamber containing oxidizing agent such as air, 11 denotes a port for supplying the oxidizing agent, and 12 denotes an outlet port for a reaction product such as water. The chamber 8 for anolyte or fuel should preferably be filled with a fibrous substrate material such as glass wool or polypropylene fiber which has resistance against the electrolyte, so that fuel which is converted back into the liquid state can be carried. This is also desirable from the standpoint of preventing leakage.

The inventors have studied means for adapting the fuel element to the fuel cell, and have realized the fuel cell which will be described below.

That liquid fuel cell contains an anode, a cathode, and an electrolyte between said two electrodes, wherein a cartridge is detachably fixed via means which prevents the electrolyte from flowing back into the cartridge, and a fuel element is contained in said cartridge, said fuel element being convertible back into the initial liquid fuel by physical or chemical means.

In using the fuel element of the cartridge type, a problem resides in preventing the leakage of the fuel at the time of attaching or detaching the cartridge. In order to solve this problem, the inventors have tried not to permit the reversal of flow of the electrolyte in the cell after the cartridge has been attached, and have designed a fuel cell in which the cartridge is attached to the cell body via means for preventing the reversal of flow.

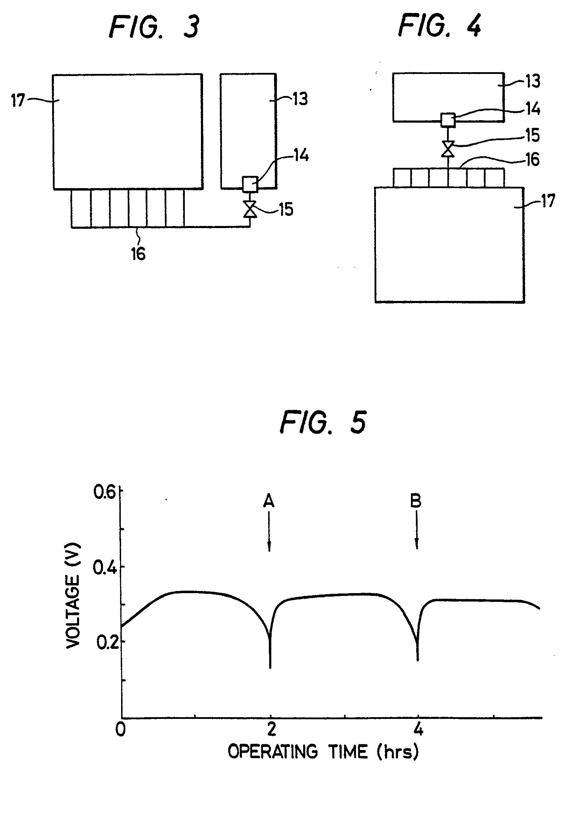

An embodiment of the fuel cell will be described below with reference to Figs. 3 and 4, which schematically illustrate the case where the invention is adapted to a liquid fuel cell of a stacked type. In Figs. 3 and 4, reference numeral 13 denotes a fuel vessel which accommodates a cartridge (not shown) and which has a port in the lower portion for supplying the liquid fuel, 14 denotes a device for preventing the reversal of flow, i.e., a check valve, 15 denotes a valve for supplying fuel, 16 denotes a manifold for supplying fuel, and 17 denotes a cell body of the stacked type. The fuel which is contained in the cartridge (not shown) accommodated in the vessel 13 and which is converted back into liquid state by the above-mentioned methods is sent into the manifold 16 via the device 14 for preventing the flow reversal and the valve 15, and is supplied into the anodes in the stacked cells. With the abovementioned liquid fuel cell, the cartridge can easily be attached or detached to replenish the fuel or to renew it, without rising probability of leakage of electrolyte. Further, no pump is required to supply the fuel, and the liquid fuel cell can be constructed in small size and with reduced weight. Owing to the provision of the device for preventing the flow reversal, furthermore, concentration of the electrolyte can be maintained constant. Fig. 3 illustrates the case where the fuel vessel 13 is provided in side-by-side relationship with the stacked cell body 17, i.e. on the same horizontal level, and Fig. 4 illustrates the case where the fuel vessel 13 is provided above the stacked cell body 17. With the liquid fuel cell of the construction shown in Fig. 4, the fuel flows down smoothly being assisted by gravity.

Mentioned below are working examples in which fuel elements according to the invention are prepared, and practically used for the fuel cells.

### Example 1
(Preparation of fuel element)

One part by weight of dextrin was dissolved in 5 parts by weight of distilled water, to which were added 10 parts by weight of methanol. The thus obtained powder was introduced into a bag made of a nonwoven fabric of polypropylene. The powder in the bag was accommodated in a cartridge made of polypropylene (net was also made of polypropylene) as shown in Fig. 1.

(Preparation of fuel cell)

A mixture consisting of 30 parts by weight of platinum black and 3.5 parts by weight of polytetrafluoroethylene was applied onto a wire gauze of platinum, and was baked in a nitrogen atmosphere at about 300°C for 0.5 hour, to prepare an anode. Further, another mixture consisting of 30 parts by weight of platinum black and 7.5 parts by weight of polytetrafluoroethylene was applied onto a wire gauze of platinum, and a porous sheet (water-proof film) composed of polytetrafluoroethylene was superposed on one side of the wire gauze. The thus assembled electrode was compressed under a pressure of 300 bar, and was baked in a nitrogen atmosphere a temperature of 300°C for 0.5 hour, to prepare a cathode. Then, using the thus prepared two electrodes, a fuel cell of the construction shown in Fig. 2 was assembled. A cation exchanger film (Nafion® 425 produced by Du Pont Co.) was used as a separator, and was impregnated with a 1.5 mol/l of sulfuric acid aqueous solution that served as an electrolyte.

The above fuel cell was loaded with the fuel element to produce electric power. Water was poured into the fuel cartridge in an amount twice the weight of methanol that had been contained in the fuel cartridge, and the fuel supply valve was opened to supply the fuel into the anode. Resulting discharge characteristics of the cell are shown in Fig. 5. The discharge current density was 40 mA/cm², and the temperature was maintained at room temperature. Air was supplied by a blower. In Fig. 5, points A and B represents the moments at which the fuel element was renewed. It will be obvious from Fig. 5 that the fuel cell of the present invention is sufficiently practicable.

### Example 2

4 Parts by weight of a silica powder and 1 part by weight of methanol were mixed well. The mixture was wrapped in a filtering paper and was introduced into a bag made of a nonwoven fabric of polypropylene. The bag was then accommodated in a cartridge made of polypropylene as shown in Fig. 1.

Using the thus obtained fuel element, a fuel cell was constructed in the same manner as in above Example 1.

Two parts by weight of water were added into the cartridge of the fuel cell, and the fuel supply valve was opened to supply fuel to the anode, thereby to operate the cell. Resulting discharge characteristics of the cell were nearly the same as the characteristics shown in Fig. 5.

### Claims

1. A liquid fuel cell comprising an anode (5), a cathode (6), an electrolyte (7) which is provided between said anode (5) and cathode (6), an anolyte chamber (8), wherein fuel is supplied to said anode (5), an oxidizing agent chamber (10), wherein oxidizing agent is supplied to said cathode (6), and a fuel element (1) accommodated in a cartridge (2), said cartridge (2) being detachably attached to and in communication with said anolyte chamber (8), characterized in that said fuel element (1) comprises fuel which is in non-fluid form but is convertible to fluid form by desorption or hydrolysis on addition of water.

2. The liquid fuel cell according to claim 1, wherein said fuel element (1) comprising fuel in non-fluid form is prepared by adsorbing a liquid fuel such as methanol, formic acid, formalin and hydrazine on an adsorbing agent such as dextrin, dextran, silica gel, silica, alumina, molecular sieves, kaolin, diatomaceous earth, carbon black and activated carbon.

3. The liquid fuel cell according to claim 1, wherein said fuel element (1) comprising fuel in non-fluid form is prepared by forming solid salts or polymers of liquid fuels such as sodium formate, potassium formate, hydrazinium sulfate, lithium methylate, sodium methylate, potassium methylate, metaformaldehyde and paraformaldehyde.

4. The liquid fuel cell according to any of claims 1 to 3, wherein said fuel element (1) is wrapped in a fibrous substrate material (3).

5. The liquid fuel cell according to any of claims 1 to 4 further comprising means (14) for preventing the reverse flow of said electrolyte (7) into said anolyte chamber (8, 13).

### Patentansprüche

1. Flüssigbrennstoff-Zelle mit einer Anode (5), einer Kathode (6), einem Elektrolyten (7), der zwischen der Anode (5) und der Kathode (6) vorgesehen ist, einer Anolyt-Kammer (8), in der der Anode (5) Brennstoff zugeführt wird, einer Oxidationsmittel-Kammer (10), in der der Kathode (6) Oxidationsmittel zugeführt wird, und einem in einer Kassette (2) untergebrachten Brennstoffelement (1), wobei die Kassette (2) abnehmbar an der und in Verbindung mit der Anolyt-Kammer (8) angebracht ist, dadurch gekennzeichnet, daß das Brennstoffelement (1) Brennstoff in nicht-flüssiger Form aufweist, der jedoch durch Desorption oder Hydrolyse bei Zugabe von Wasser in flüssige Form konvertierbar ist.

2. Flüssigbrennstoff-Zelle nach Anspruch 1, wobei das Brennstoff in nicht-flüssiger Form aufweisende Brennstoffelement (1) durch Adsorbieren eines Flüssigbrennstoffes, wie Methanol, Formyl-Methansäure, Formalin und Hydrazin, auf einem adsorbierenden Stoff, wie Dextrin, Dextran, Silicagel, Silica, Aluminiumoxid, Molekularsieben, Kaolin, Kieselgur, Carbon Black und Aktivkohle, hergestellt ist.

3. Flüssigbrennstoff-Zelle nach Anspruch 1, wobei das Brennstoff in nicht-flüssiger Form aufweisende Brennstoffelement (1) durch Bilden fester Salze oder Polymere von Flüssigbrennstoffen, wie Natriumformiat, Kaliumformiat, Hydraziniumsulfat, Lithiummethylat, Natriummethylat, Kaliummethylat, Metaformaldehyd und Paraformaldehyd, hergestellt ist.

4. Flüssigbrennstoff-Zelle nach einem der Ansprüche 1 bis 3, wobei das Brennstoffelement (1) in ein fasriges Substratmaterial (3) gewickelt ist.

5. Flüssigbrennstoff-Zelle nach einem der Ansprüche 1 bis 4, weiterhin aufweisend eine Einrichtung (14) zum Verhindern des Gegenstroms des Elektrolyten (7) in die Anolyt-Kammer (8, 13).

### Revendications

1. Pile à combustible liquide comportant une anode (5), un cathode (6), un électrolyte (7) prévu entre ladite anode (5) et ladite cathode (6), une chambre (8) contenant l'anolyte, dans laquelle le combustible est envoyé à ladite anode (5), une chambre (10) contenant l'agent oxydant, dans laquelle l'agent oxydant est envoyé à ladite cathode (6), et un élément combustible (1) logé dans une cartouche (2), ladite cartouche (2) étant fixée de façon détachable à et communiquant avec ladite chambre (8) contenant l'anolyte, caractérisée en ce que ledit élément combustible (1) comprend un combustible, qui est présent sous une forme non fluide, mais est convertible sous une forme fluide par désorption ou hydrolyse avec addition d'eau.

2. Pile à combustible liquide selon la revendication 1, dans laquelle ledit élément combustible (1) comprenant un combustible sous une forme non fluide est préparé par adsorption d'un combustible liquide, tel que du méthanol, de l'acide formique, de la formaline et de l'hydrazine, sur un agent adsorbant tel que la dextrine, le dextrane, le gel de silice, la silice, l'alumine, des tamis moléculaires, le kaolin, une terre à diatomées, le noir de carbone et le charbon activé.

3. Pile à combustible liquide selon la revendication 1, dans laquelle ledit élément combustible (1) comprenant le combustible sous une forme non fluide est préparé par formation de sels solides ou de polymères de combustibles liquides, comme par exemple le formate de sodium, le formate de potassium, le sulfate d'hydrazine, le méthylate de lithium, le méthylate de sodium, le méthylate de potassium, la méthaformaldéhyde et la paraformaldéhyde.

4. Pile à combustible liquide selon l'une quelconque des revendications 1 à 3, dans laquelle ledit élément combustible (1) est enroulé dans un matériau formant substrat fibreux (3).

5. Pile à combustible liquide selon l'une quelconque des revendications 1 à 4, comportant en outre des moyens (14) servant à empêcher le reflux dudit électrolyte (7) dans ladite chambre (8, 13) contenant l'anolyte.

## FIG. 1

## FIG. 2

## FIG. 3

17 — 

13 —

14 —

15 —

16 —

## FIG. 4

13 —

14 —

15 —

16 —

17 —

## FIG. 5

VOLTAGE (V)

0.6

0.4

0.2

A

B

0     2     4

OPERATING TIME (hrs)